# EUROPEAN PATENT APPLICATION

(11) **EP 4 742 036 A1**
(43) Date of publication of application: **13.05.2026**
(21) Application number: 25212449.0
(22) Date of filing: 30.10.2025
(51) Int. Cl.: G06F 9/50, G06F 8/61, G06F 15/177, H04L 41/0806, H04L 67/1031

(54) **RESOURCE MANAGEMENT PROGRAM, RESOURCE MANAGEMENT METHOD, AND RESOURCE MANAGEMENT APPARATUS**

(30) Priority: 06.11.2024 JP 2024194496
(71) Applicant: Fsas Technologies Inc., Nakahara-ku Kawasaki-shi, Kanagawa 211-0012 (JP)
(72) Inventor: HANADA, Mitsuru, Kawasaki-shi, 211-0012 (JP); TANEDA, Masahiro, Kawasaki-shi, 211-0012 (JP); FURUHASHI, Yoshihiro, Kawasaki-shi, 211-0012 (JP); HOSOKAWA, Yuka, Kawasaki-shi, 211-0012 (JP)
(74) Representative: Haseltine Lake Kempner LLP

(57) **Abstract**

A computer (31) is caused to perform a process including, installing an OS on a standby server having a predetermined hardware configuration and setting the standby server to standby in a state where the OS is booted, specifying, when the standby server is incorporated into a cluster, a hardware resource to be used based on a predetermined job to be allocated to the standby server and specifying an additional resource to be added to the predetermined hardware configuration; acquiring the additional resource from a resource pool that stores a plurality of hardware resources and adding the acquired additional resource to the standby server, completing configuring the additional resource in the standby server, and incorporating the standby server into the cluster.

## Description

### FIELD

The embodiment discussed herein is related to a resource management program, a resource management method, and a resource management apparatus.

### BACKGROUND

In core businesses or data centers of companies, a method called clustering in which many computers such as servers are clustered and collectively managed is frequently used. Each of the clustered computers is called a node. As a clustering software for implementing the clustering, RHOCP (Red Hat (registered trademark), OpenShift (registered trademark) Container Platform), Rancher, or the like is present.

By using the clustering software, a node can be dynamically added or deleted according to the total load of the cluster. The clustering technique is particularly important, for example, when a business has a large variation in load or business expansion is expected.

Further, as a technique for improving the convenience of clustering, a technique called a composable disaggregated infrastructure (CDI) has been developed. In the CDI system, various computer resources such as a GPU (Graphics Processing Unit) or a computer main body are pooled in advance as the entire system, and computers with various configurations can be dynamically prepared as needed.

As the clustering technique, the following technique is present. There is disclosed a technique for setting a transfer unit and an input/output (I/O) unit of a standby server device to standby, setting the status of an application execution unit to active, and switching the transfer unit and the I/O unit from standby to active when a failure is detected. In addition, there is disclosed a technique in which, when an identifier of each system switching method is set and hot standby is selected, a system switching method corresponding to a designated identifier is reflected on a standby system in a state where the standby system is activated. In addition, in a work inheriting system including a plurality of clusters, a technique of inheriting a work of a cluster in which a failure occurs to a hot standby cluster is disclosed.
Patent Literature 1: Japanese Laid-open Patent Publication No. 2012-155540
Patent Literature 2: Japanese Laid-open Patent Publication No. 2008-269332
Patent Literature 3: International Publication Pamphlet No. WO 1997/049034

However, when a node is added to a cluster, the following problem occurs. When a node is added to a cluster where a job that is not allocated due to resource deficiency occurs, a work for preparing a node in a state where a job can be executed, for example, hardware configuration construction, OS (Operating System) installation, or software deployment is executed. For this work, for example, about 600 seconds is needed as a whole. In addition, when an activated node is set to standby and the node set to standby is added to a cluster where a job that is not allocated due to resource deficiency occurs, resources of the added node may be unsuitable for the job. For example, a case where a GPU having a sufficient performance is not provided in a standby node for a job that needs a high-performance GPU or a case where a high-performance GPU is mounted on a standby node for a job that does not need a GPU can be considered. This way, in the clustering technique of the related art, it is difficult to add a node having a hardware configuration corresponding to a job within a short period of time, and the efficient use of resources is difficult.

Even in the technique of setting the transfer unit and the I/O unit to standby, setting the status of the application execution unit to active, and executing the switching, it is difficult to add a node having a hardware configuration corresponding to a job. In addition, in the technique of reflecting the system switching method designated to each standby system or the technique of inheriting the work of the cluster where a failure occurs to the hot standby cluster, resources to be added are fixed, and it is difficult to add a node having a hardware configuration corresponding to a job. Accordingly, regardless of the use of any of the techniques, the efficient use of resources is difficult.

The present disclosed technique has been made under these circumstances, and an object thereof is to provide a resource management program, a resource management method, and a resource management apparatus capable of improving the usage efficiency of resources.

### SUMMARY

According to an aspect of an embodiment, a resource management program causes a computer to perform a process including, installing an operating system (OS) on a backup device having a predetermined hardware configuration and setting the backup device to standby in a state where the OS is booted, specifying, when the backup device is incorporated into a cluster, a hardware resource to be used based on a predetermined job to be allocated to the backup device and specifying an additional resource to be added to the predetermined hardware configuration, acquiring the additional resource from a resource pool that stores a plurality of hardware resources and adding the acquired additional resource to the backup device, completing configuring the additional resource in the backup device; and incorporating the backup device into the cluster.

### BRIEF DESCRIPTION OF DRAWINGS

FIG. 1 is a system configuration diagram of a CDI system;
FIG. 2 is a block diagram of a CDI management server;
FIG. 3 is a diagram illustrating an example of a resource management table;
FIG. 4 is a diagram illustrating a sequence of an incorporation process of a server into a cluster by a CDI management server according to an embodiment;
FIG. 5 is a diagram illustrating an incorporation process of the server into the cluster by CDI management software;
FIG. 6 is a flowchart of an additional resource determination process;
FIG. 7 is a diagram illustrating a sequence of an incorporation process of a server into a cluster in the case of starting from an initialization of hardware; and
FIG. 8 is a hardware configuration diagram of the CDI management server.

### DESCRIPTION OF EMBODIMENT

Hereinafter, an embodiment of a resource management program, a resource management method, and a resource management apparatus according to the present disclosure will be described in detail based on the drawings. The resource management program, the resource management method, and the resource management apparatus according to the present disclosure are not limited to the following embodiment.

### Embodiment

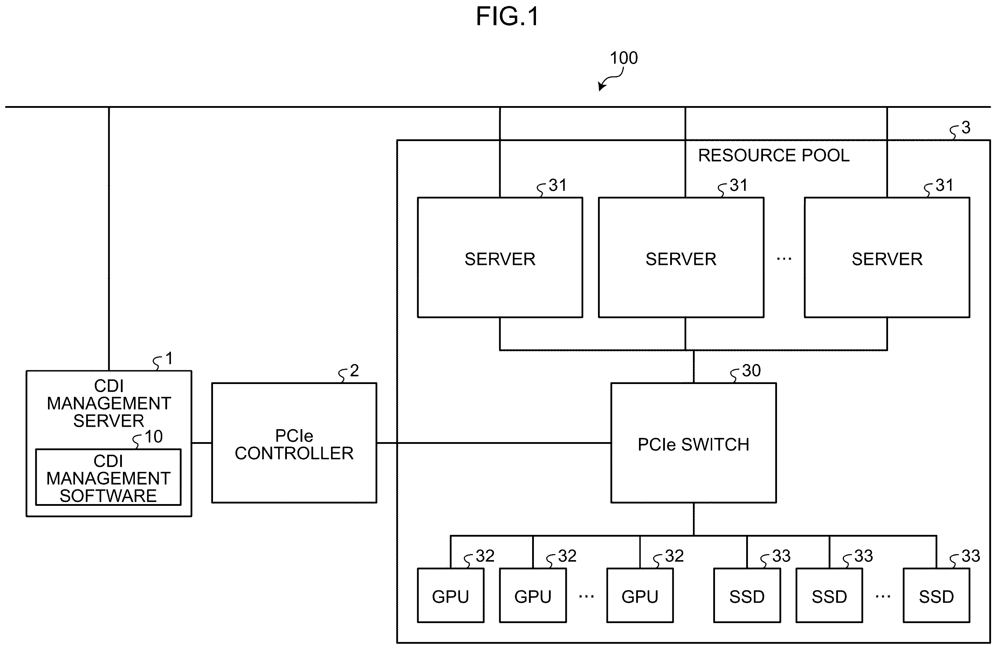

FIG. 1 is a system configuration diagram of a CDI system. As illustrated in FIG. 1, a CDI system 100 includes a CDI management server 1, a peripheral component interconnect express (PCIe) controller 2, and a resource pool 3.

The resource pool 3 includes computer resources such as a PCIe switch 30, a plurality of servers 31, a plurality of GPUs 32, and a plurality of solid state drives (SSDs) 33. Hereinafter, the GPUs 32 and the SSDs 33 will be referred to as "extended resources". In the resource pool 3, a memory utilizing a compute express link (CXL) technique can also be introduced as an extended resource.

The plurality of servers 31, the plurality of GPUs 32, and the plurality of SSDs 33 are connected to the PCIe switch 30. The PCIe switch 30 switches a path between the server 31 and the extended resource under the control of the PCIe controller 2 such that each of the GPUs 32 and the SSDs 33 can be connected to any of the servers 31.

The server 31 is an information processing device on which a central processing unit (CPU) or a memory is mounted. The server 31 is connected to the CDI management server 1 through a network. The server 31 can operate as one or more cluster systems under the control of clustering software that operates in the CDI management server 1. Each of the servers 31 in the cluster system executes a job.

Any of the servers operates as a job management server that allocates the job to each of the servers 31. The server 31 that is the job management server may execute a job. The server 31 that is the job management server has a job queue, allocates a job stored in the job queue to the server 31, and executes the job. In addition, the server 31 that is the job management server notifies the CDI management server 1 of information of the job queue and the allocation state of the job.

The PCIe controller 2 is mounted on, for example, a server different from the CDI management server 1. The PCIe controller 2 is connected to the CDI management server 1. Here, the PCIe controller 2 may be mounted on the CDI management server 1.

In accordance with an instruction from the CDI management server 1, the PCIe controller 2 causes the PCIe switch 30 to switch the path to connect any of a designated number of the GPUs 32 or the SSDs 33 in the resource pool 3 or a combination thereof to the designated server 31. In addition, when the resource pool 3 includes a memory, the PCIe controller 2 can connect the memory to the server 31 in accordance with an instruction from the CDI management server 1.

In the CDI management server 1, the clustering software (not illustrated) and CDI management software 10 operate. The CDI management server 1 constructs the cluster system of the server 31 of the resource pool 3 using the clustering software.

In addition, the CDI management software 10 constructs a logical server or distributes software such as an OS or an application to each of the servers 31. In addition, the CDI management software 10 can instruct the PCIe controller 2 to allocate an extended resource to the specific server 31. For example, the CDI management software 10 monitors the clustering software and detects deficiency of a computer resource. For example, when the extended resource is deficient, the CDI management software 10 instructs the PCIe controller 2 to allocate the deficient extended resource.

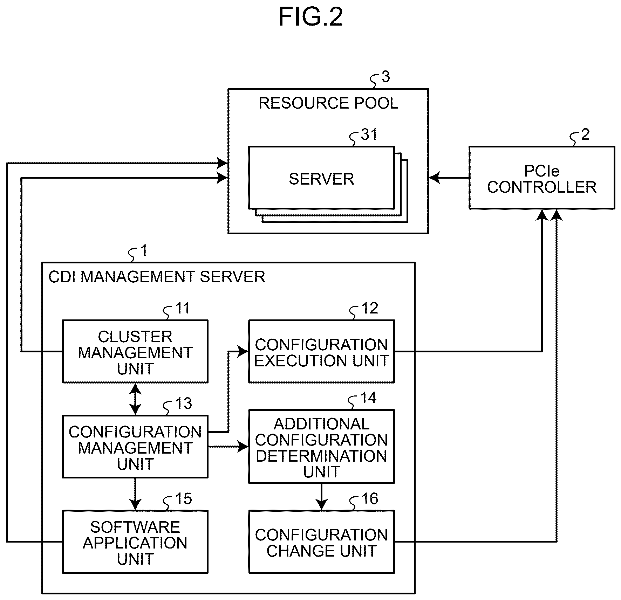

FIG. 2 is a block diagram illustrating the CDI management server. Hereinafter, the details of the CDI management server 1 will be described with reference to FIG. 2. As illustrated in FIG. 2, the CDI management server 1 includes a cluster management unit 11, a configuration execution unit 12, a configuration management unit 13, an additional configuration determination unit 14, a software application unit 15, and a configuration change unit 16.

The functions of the clustering software include the cluster management unit 11. In addition, the functions of the CDI management software 10 include the configuration execution unit 12, the configuration management unit 13, the additional configuration determination unit 14, the software application unit 15, and the configuration change unit 16.

The cluster management unit 11 receives an instruction of cluster construction including cluster configuration information from a user terminal (not illustrated). The cluster configuration information includes the number of the servers 31 used, the number of the servers 31 to be operated, information of a configuration of a computer resource to be incorporated into each of the servers 31 to be operated, and information of an application to be operated. Further, the cluster configuration information includes the number of the servers 31 to be reserved as backup servers among the number of the servers 31 to be used.

The cluster management unit 11 outputs the cluster configuration information received from the user terminal to the configuration management unit 13. Next, the cluster management unit 11 receives an input of information of the server 31 in the cluster of the resource pool 3 from the configuration management unit 13. The cluster management unit 11 constructs the cluster system in accordance with the instruction of the cluster construction using the server 31 designated as the server 31 in the cluster. At this time, the cluster management unit 11 constructs a logical server in the cluster.

The cluster includes the actually operating server 31 and the standby server 31. Accordingly, hereinafter, providing the new server 31 as the actually operating server 31 or the standby server 31 to the cluster will be referred to as "adding the server 31 to the cluster". In addition, changing the standby server 31 to a new actually operating server 31 and operating the changed server 31 as the cluster will be referred to as "incorporating the server into the cluster". In addition, hereinafter, the server 31 to be operated will be referred to as "operating server", and the server 31 set to standby as the backup server 31 will be referred to as "standby server".

The cluster management unit 11 acquires the information regarding the job queue of the cluster and the allocation state of the job from the server 31 that is the job management server. The cluster management unit 11 outputs the acquired information regarding the job queue of the cluster and the allocation state of the job to the configuration management unit 13. Next, when a logical server to which the job is to be allocated is deficient in the cluster, the cluster management unit 11 receives an instruction to incorporate the new server 31 into the cluster from the configuration management unit 13. The cluster management unit 11 incorporates the server 31 that is the standby server into the cluster.

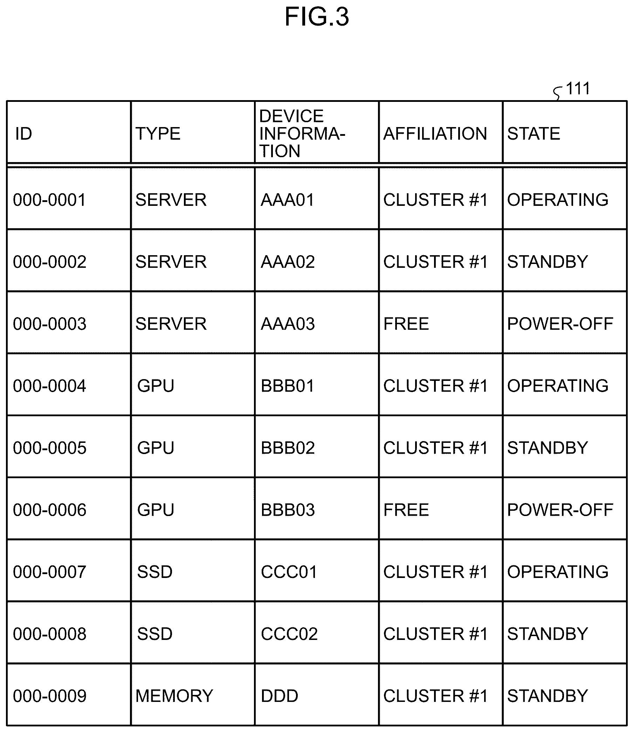

The configuration management unit 13 stores a resource management table 111 illustrated in FIG. 3. FIG. 3 is a diagram illustrating an example of the resource management table. In the resource management table 111, for example, an identifier (ID), a type, device information, an affiliation, and a state of the computer resource are registered.

The ID is a unique identifier in the CDI system 100. The type is the type of each computer resource. The device information is information such as a product name or a capacity. The affiliation is information representing the cluster to which each computer resource belongs. The state represents the operating state of each computer resource. In an initial state, the configuration management unit 13 sets the affiliation of the computer resource to free, and sets the state to power-off.

When the CDI system 100 is provided, the configuration management unit 13 receives information input from a user through the user terminal regarding each device in the CDI system 100, and registers the received information in the resource management table 111. In addition, the configuration management unit 13 may automatically acquire information from the servers 31, the GPUs 32, the SSDs 33, and the like present in the resource pool 3 through the PCIe controller 2, and may register the information regarding each device in the resource management table 111.

The configuration management unit 13 receives an input of the cluster configuration information from the cluster management unit 11. The configuration management unit 13 refers to the resource management table 111 to select the number of the servers 31 of which the affiliation is free to be provided to the cluster. The configuration management unit 13 selects the server 31 that is the operating server and the server 31 that is the standby server from the selected servers 31.

Next, the configuration management unit 13 gives not only the information of the operating server and the standby server and information of a hardware configuration of each server 31 that is the operating server but also an instruction to execute configuring each server 31 to the configuration execution unit 12.

Next, the configuration management unit 13 notifies the cluster management unit 11 of the information of the operating server and the standby server, and constructs a cluster. After the construction of the cluster, the configuration management unit 13 sets the affiliation of each server 31 in the resource management table 111 to the cluster to which the server 31 belongs. In addition, the configuration management unit 13 sets the state of the server 31 selected as the operating server to operating. In addition, the configuration management unit 13 sets the state of the server 31 selected as the standby server to standby. Next, the configuration management unit 13 instructs the software application unit 15 to deploy software on the server 31 in the cluster.

For example, two servers 31 will be described using a case where a request to construct a RHOCP cluster with two GPUs 32, one SSD 33, and one memory. The configuration management unit 13 selects the server 31 among the standby servers of which the affiliation is free from the resource management table 111, causes the configuration execution unit 12 to construct a physical server where predetermined extended resources are mounted, and subsequently causes the cluster management unit 11 to install RHOCP. When the construction of the cluster ends, the configuration management unit 13 changes the affiliations in the resource management table 111 to the constructed cluster. Further, the configuration management unit 13 sets the state of the operating server to operating, and sets the state of the standby server to standby. Next, the configuration management unit 13 causes the software application unit 15 to deploy software such as the OS, various drivers, and applications to be used on the server 31 that is the operating server, and activates the cluster. In addition, the configuration management unit 13 causes the software application unit 15 to install the OS on the server 31 that is the standby server, and boots the OS of the server 31.

Here, the standby server corresponds to an example of "backup device". The configuration management unit 13 installs the OS on the backup device having a predetermined hardware configuration, and sets the backup device to standby in a state where the OS is booted. In addition, the configuration management unit 13 monitors the cluster by acquiring the cluster configuration information from the cluster management unit 11, and determines whether or not to incorporate the standby server that is the backup device into the cluster based on the allocation state of the jobs stored in the job queue.

In addition, the configuration management unit 13 acquires the information regarding the job queue of the cluster and the allocation state of the jobs from the cluster management unit 11 during the operation of the cluster. The configuration management unit 13 determines whether or not a job in a pending state to which a logical server is not allocated is present in the job queue. When the job in the pending state is present, the configuration management unit 13 instructs the additional configuration determination unit 14 to determine an additional resource. Next, when the construction of the physical configuration of the server 31 is completed, the configuration management unit 13 instructs the cluster management unit 11 to incorporate the new server 31 into the cluster. Next, the configuration management unit 13 instructs the software application unit 15 to deploy software such as applications on the server 31 to be newly incorporated into the cluster.

The configuration execution unit 12 previously stores information of a minimum configuration of predetermined hardware for the server 31 that is the standby server in the cluster. This minimum configuration corresponds to an example of "predetermined hardware configuration". The minimum configuration may be, for example, a configuration of the server 31 in a state where an extended resource is not added. In addition, the minimum configuration may be a configuration of the server 31 where a predetermined number of GPUs 32 or SSDs 33 is added, for example, where one GPU 32 is added.

Next, the configuration execution unit 12 receives not only the information of the operating server and the standby server and information of a hardware configuration of each server 31 that is the operating server but also an instruction to execute configuring each server 31 from the configuration management unit 13. When there is an additional resource for achieving the hardware configuration designated to each operating server, the configuration execution unit 12 instructs the PCIe controller 2 to add the additional resource to the target server 31.

In addition, the configuration execution unit 12 determines whether or not an additional resource for achieving the minimum configuration for each standby server is present. When the additional resource is present, the configuration execution unit 12 instructs the PCIe controller 2 to add the additional resource to the server 31 that is the standby server. This way, in order to achieve the minimum configuration of the standby server before installing the OS on the standby server, the configuration execution unit 12 may execute a process of acquiring a predetermined resource from the resource pool 3 and adding the acquired resource to the standby server.

Next, the configuration execution unit 12 executes initialization of hardware for all the servers 31 including the operating server and the standby server. Further, the configuration execution unit 12 activates a bios input/output system (BIOS) in each server 31

The additional configuration determination unit 14 receives an instruction to determine the additional resource from the configuration management unit 13. The additional configuration determination unit 14 specifies computer resources used for allowing a job where resources are deficient to be executed in the server 31 that is newly incorporated into the cluster. Next, the additional configuration determination unit 14 checks a difference between the computer resources used by the server 31 where the job is executed and the minimum configuration, and determines whether or not the minimum configuration is sufficient for the computer resources used by the server 31 where the job is executed.

When the minimum configuration is not sufficient for the computer resources, the additional configuration determination unit 14 specifies an additional resource that is not provided in the minimum configuration among the computer resources used for allowing the job to be executed in the server 31. The additional configuration determination unit 14 notifies the configuration change unit 16 of an instruction to add the specified additional resource.

Here, the job that is allocated to the server 31 that is newly incorporated due to the deficiency of resources to be allocated corresponds to an example of "predetermined job to be allocated to the standby server". When the standby server that is the backup device is incorporated into the cluster, the additional configuration determination unit 14 specifies a hardware resource to be used based on the predetermined job to be allocated to the standby server, and determines an additional resource to be added to the predetermined hardware configuration. In addition, the additional configuration determination unit 14 acquires information of the predetermined job among the jobs stored in the job queue of the cluster, determines a hardware resource to be used, and sets a difference between the determined hardware resource and the minimum configuration that is the predetermined hardware configuration to the additional resource. In addition, the additional configuration determination unit 14 can specify at least one or more types among the GPU 32, the SSD 33 that is an auxiliary storage device, and the memory that is a main storage device as the additional resource.

The configuration change unit 16 receives an input of an instruction to add the additional resource from the additional configuration determination unit 14. The configuration change unit 16 instructs the PCIe controller 2 to add the additional resource to the server 31. This way, the configuration change unit 16 instructs the PCIe controller 2 to acquire the additional resource from the resource pool 3 that stores a plurality of hardware resources and to add the acquired additional resource to the server 31 that is the backup device and the standby server.

At the time of the cluster construction, the software application unit 15 receives an instruction to deploy the software on the server 31 in the cluster from the configuration management unit 13. The software application unit 15 loads the OS to be installed on the server 31. Next, the software application unit 15 installs the OS loaded to the server 31.

The software application unit 15 boots the OS of the server 31 that is the standby server in a state where the OS is installed. From the above, the software application unit 15 completes the preparation of the server 31 set to standby.

In addition, regarding the operating server, the software application unit 15 loads a driver used for the server 31. Next, the software application unit 15 reserves resources of the driver in the server 31 that is the operating server. Next, the software application unit 15 installs the driver on the server 31 using the reserved resources, and completes the configuration. Here, the software application unit 15 may install various applications such as business software on the server 31.

When the server 31 is newly incorporated into the cluster that is operating, the software application unit 15 receives an instruction to deploy software such as applications on the server 31 that is newly incorporated into the cluster from the configuration management unit 13. Next, the software application unit 15 loads a driver to be used in the server 31 that is newly incorporated into the cluster. Next, the software application unit 15 reserves resources of the driver in the server 31 that is newly incorporated into the cluster. Next, the software application unit 15 installs the driver using the reserved resources, and completes configuring the server 31 that is newly incorporated into the cluster. Here, the software application unit 15 may install various applications such as business software on the server 31.

This way, the software application unit 15 completes configuring the additional resource in the standby server that is the backup device. The process of completing configuring the standby server includes at least the process of loading the driver of the additional resource, reserving the resources used for the driver, and installing the driver.

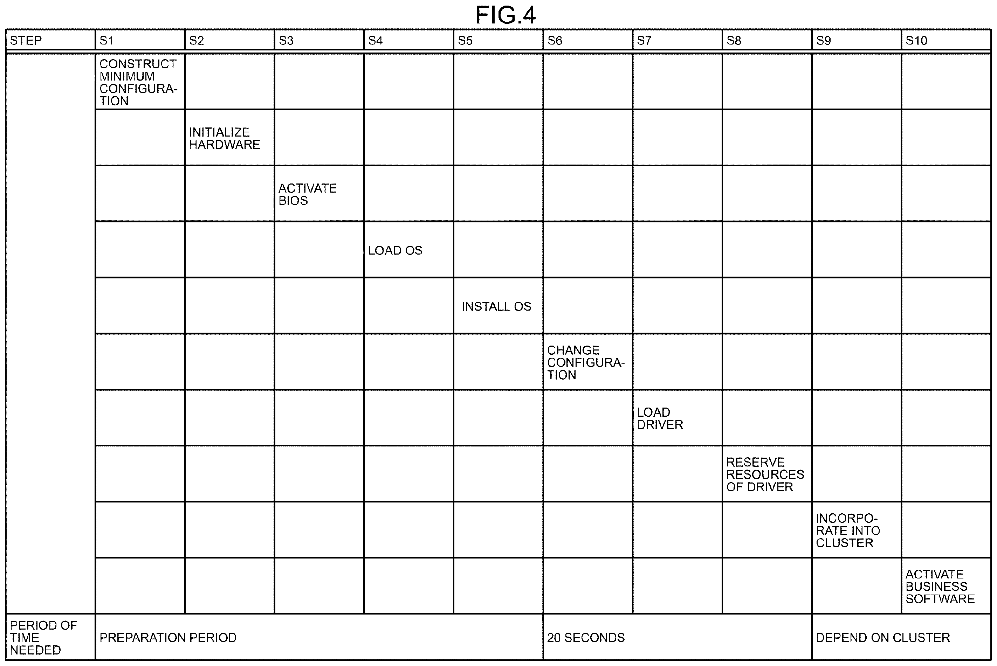

FIG. 4 is a diagram illustrating a sequence of the incorporation process of the server into the cluster by the CDI management server according to the embodiment. In FIG. 4, the horizontal axis represents each process step and the lapse of time. Next, the incorporation process of the server 31 into the cluster by the CDI management server 1 according to the embodiment will be collectively described with reference to FIG. 4.

At the time of the cluster construction, the configuration execution unit 12 constructs the server 31 having the minimum configuration as the standby server (Step S1). Next, the configuration execution unit 12 initializes the hardware of the server 31 that is the standby server (Step S2). Next, the configuration execution unit 12 activates the BIOS in the server 31 that is the standby server (Step S3). Next, the configuration execution unit 12 loads the OS (Step S4). Next, the configuration execution unit 12 installs the OS on the server 31 that is the standby server (Step S5). The above-described process by the configuration execution unit 12 is the preparation. This preparation process is executed before a timing at which the server 31 is incorporated into the cluster. Therefore, the processing time for incorporating the server 31 into the cluster does not include the period of time needed for Steps S1 to S5.

Next, when deficiency of the computer resources occurs, the additional configuration determination unit 14 determines whether or not an additional resource that is not provided in the minimum configuration is present among the computer resources used for allowing the job to be executed in the server 31. When the additional resource is present, the configuration change unit 16 instructs the PCIe controller 2 to add the additional resource to the server 31 and to change the configuration of the server 31 (Step S6).

Next, the software application unit 15 loads the driver used for the server 31 (Step S7). Next, the software application unit 15 reserves resources of the driver in the server 31 (step S8). Next, the software application unit 15 installs the driver using the reserved resources, and completes configuring the server 31. The period of time needed for Steps S6 to S8 is, for example, 20 seconds.

Next, the cluster management unit 11 incorporates the server 31 where the configuration is completed into the cluster (Step S9). The cluster management unit 11 activates the business software (Step S10). The period of time needed for the process of Steps S9 to S10 depends on the cluster.

As described above, the CDI management server 1 according to the embodiment can incorporate the server 31 having the appropriate hardware configuration into the cluster and activate the server 31, for example, within a period of time obtained by adding the time of Steps S9 to S10 that depends on the cluster to 20 seconds.

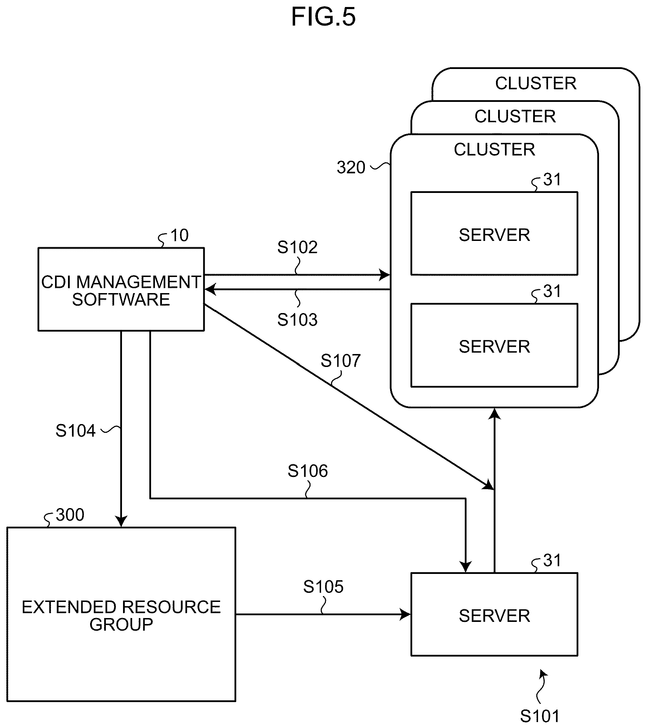

FIG. 5 is a diagram illustrating the incorporation process of the server into the cluster by CDI management software. Here, the summary of the incorporation process of the server into the cluster by the CDI management software 10 will be collectively described again with reference to FIG. 5.

As the preparation, the CDI management software 10 previously sets the server 31 having the minimum configuration to the state where the OS is completely booted (Step S101).

Next, the CDI management software 10 monitors each cluster 320 (Step S102).

When a cluster to which a computer resource is to be added is detected from the allocation state of the jobs, the CDI management software 10 determines the additional resource corresponding to the server 31 to be added and the job to be executed (Step S103).

Next, the CDI management software 10 reserves the determined additional resource from the resource pool 3 (Step S104). An extended resource group 300 illustrated in FIG. 3 is a group containing the reserved additional resource.

Next, the CDI management software 10 adds the additional resource to the server 31 (Step S105). The CDI management software 10 installs the driver on the server 31 (Step S106).

Next, the CDI management software 10 instructs clustering software to incorporate the server 31 into the cluster 320 (Step S107).

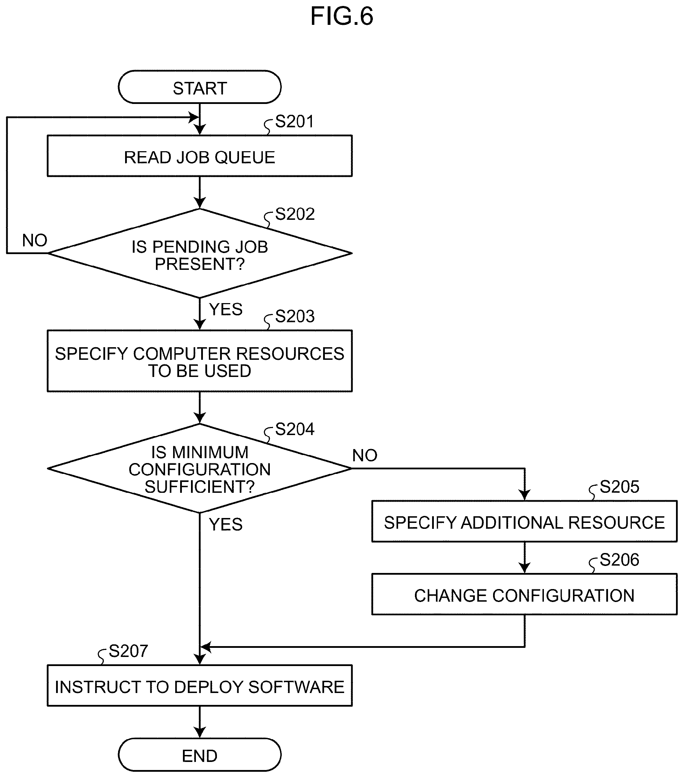

FIG. 6 is a flowchart of the additional resource determination process. Next, the flow of the additional resource determination process will be described with reference to FIG. 6.

The configuration management unit 13 acquires and reads the job queue from the cluster management unit 11 (Step S201).

Next, the configuration management unit 13 determines whether or not a pending job in a pending state to which a logical server is not allocated is present in the job queue (Step S202). When the pending job is not present (Step S202: NO), the configuration management unit 13 returns to Step S201.

When the pending job is present (Step S202: YES), the additional configuration determination unit 14 specifies computer resources used for allowing a job where resources are deficient to be executed in the server 31 that is incorporated into the cluster (Step S203). Next, the additional configuration determination unit 14 determines whether or not the minimum configuration is sufficient for the specified computer resources (Step S204).

When the minimum configuration is sufficient for the specified computer resources (Step S204: YES), the additional resource determination process proceeds to Step S207. On the other hand, when the minimum configuration is not sufficient for the specified computer resources (Step S204: NO), the additional configuration determination unit 14 specifies the additional resource that is not provided to the minimum configuration among the specified computer resources (Step S205).

The configuration change unit 16 adds the additional resource specified by the additional configuration determination unit 14 to the server 31, and changes the configuration of the server 31 (Step S206).

Next, the configuration management unit 13 instructs the software application unit 15 to deploy software on the server 31 (Step S207).

As described above, the CDI management server 1 according to the embodiment sets the server 31 that is the standby server in the cluster to the state where the OS is completely booted with the predetermined minimum configuration. When the server 31 that is the standby server is incorporated into the cluster, the CDI management server 1 determines the additional resource corresponding to the job to be executed in the server 31, dynamically adds the additional resource to the server 31, configures the server 31, and incorporates the server 31 into the cluster.

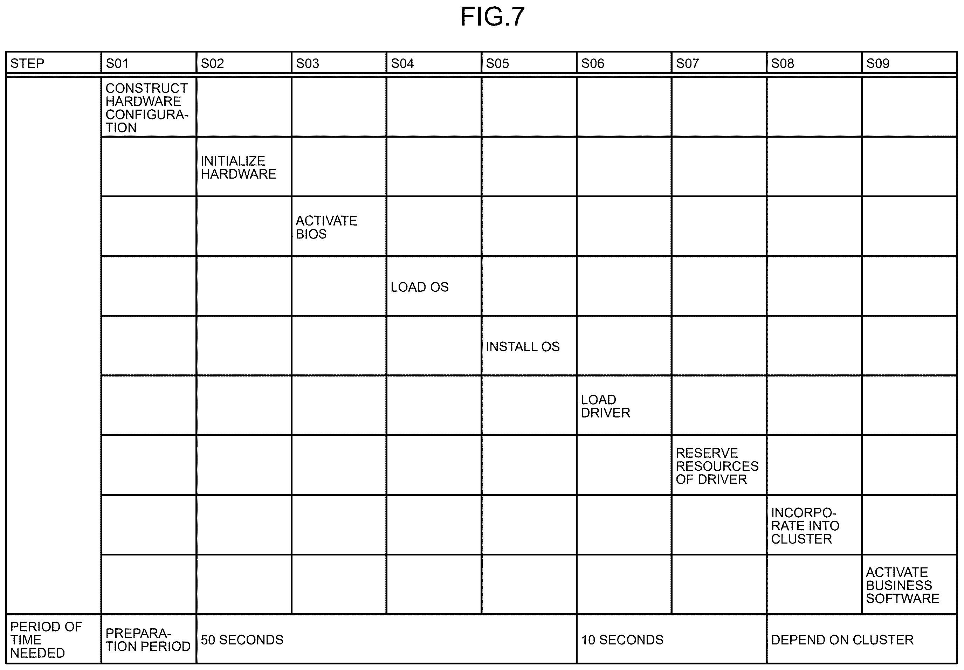

FIG. 7 is a diagram illustrating a sequence of the incorporation process of the server into the cluster in the case of starting from the initialization of hardware. Here, the period of time needed for the incorporation process of the server into the cluster in the related art will be described with reference to FIG. 7.

In the standby server, a hardware configuration for executing an assumed job is previously constructed (Step S01). This process corresponds to the preparation.

When the incorporation of the server is determined, the hardware initialization of the standby server to be incorporated is executed. (Step S02).

Next, the BIOS in the standby server is activated (Step S03).

Next, the OS of the standby server is loaded (Step S04).

Next, the OS is installed on the Standby server (Step S05). The period of time needed until the installation of the OS is, for example, 50 seconds.

Next, the driver is loaded to the standby server (Step S06).

Next, resources of the driver in the standby server are reserved (Step S07). Next, the driver is installed using the reserved resources, and the configuration of the standby server is completed. The period of time needed for Steps S6 to S7 is, for example, 10 seconds.

Next, the standby server is incorporated into the cluster as a new operating server (Step S08). Business software is activated in the new operating server (Step S09). The period of time needed for the process of Steps S08 to S9 depends on the cluster.

In this case, the server having the predetermined hardware configuration is incorporated into the cluster. On the other hand, when the CDI management server 1 is used, the server 31 to which the additional resource that is determined depending on the job is added is incorporated into the cluster. Accordingly, the configuration of the server 31 to be incorporated into the cluster can be made to have the optimum configuration for the job.

In addition, in this case, 60 seconds are needed until the driver is installed and the configuration of the server is completed after determining the incorporation of the server. On the other hand, when the CDI management server 1 is used, as illustrated in FIG. 4, 20 seconds are needed until the driver is installed and the configuration of the server 31 is completed after determining the incorporation of the server. Accordingly, by using the CDI management server 1, for example, approximately 40 seconds can be reduced in the incorporation process of the server 31 into the cluster. Accordingly, the performance of the cluster can be maintained and improved.

This way, the CDI management server 1 according to the present embodiment can reduce the period of time needed for the incorporation of the server 31 into the cluster while making the configuration of the server 31 to be incorporated into the cluster to have the optimum configuration for the job. Accordingly, the usage efficiency of the computer resources can be improved, and the performance of the cluster can be maintained and improved.

### Hardware Configuration

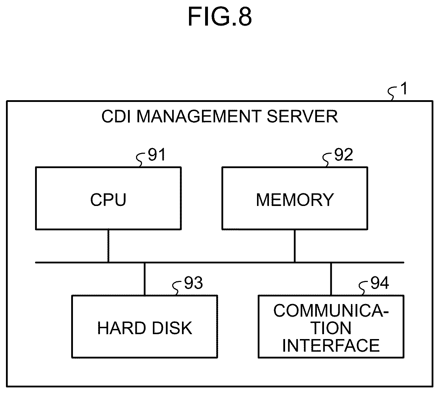

FIG. 8 is a hardware configuration diagram of the CDI management server. Next, an example of the hardware configuration for implementing each function of the CDI management server 1 will be described.

As illustrated in FIG. 8, the CDI management server 1 includes, for example, a central processing unit (CPU) 91, a memory 92, a hard disk 93, and a communication interface 94. The CPU 91 is connected to the memory 92, the hard disk 93, and the communication interface 94 through a bus.

The communication interface 94 is an interface for communication between the CDI management server 1 and an external device. The communication interface 94 relays, for example, communication between the CDI management server 1 and the server 31. In addition, the communication interface 94 may relay communication between the CDI management server 1 and the PCIe controller 2.

The hard disk 93 is an auxiliary storage device. The hard disk 93 stores various programs including programs for implementing the functions of the cluster management unit 11, the configuration execution unit 12, the configuration management unit 13, the additional configuration determination unit 14, the software application unit 15, and the configuration change unit 16 illustrated in FIG. 2.

The memory 92 is a main storage device. As the memory 92, for example, a dynamic random access memory (DRAM) can be used.

The CPU 91 reads various programs from the hard disk 93, loads the programs to the memory 92, and executes the programs. As a result, the CPU 91 implements the functions of the cluster management unit 11, the configuration execution unit 12, the configuration management unit 13, the additional configuration determination unit 14, the software application unit 15, and the configuration change unit 16 illustrated in FIG. 2.

According to one aspect of the present invention, the usage efficiency of resources can be improved.

## Claims

1. A resource management program causing a computer (31) to perform a process comprising:
installing an operating system (OS) on a backup device having a predetermined hardware configuration and setting the backup device to standby in a state where the OS is booted;
specifying, when the backup device is incorporated into a cluster, a hardware resource to be used based on a predetermined job to be allocated to the backup device and specifying an additional resource to be added to the predetermined hardware configuration;
acquiring the additional resource from a resource pool (3) that stores a plurality of hardware resources and adding the acquired additional resource to the backup device;
completing configuring the additional resource in the backup device; and
incorporating the backup device into the cluster.

2. The resource management program according to claim 1,
wherein the specifying the additional resource includes
acquiring information of the predetermined job among jobs stored in a job queue of the cluster and determining the hardware resource to be used, and
setting a difference between the determined hardware resource and the predetermined hardware configuration to the additional resource.

3. The resource management program according to claim 2, wherein the setting the backup device to standby in the state where the OS is booted includes monitoring the cluster and determining whether or not to execute the incorporation of the backup device based on an allocation state of the jobs stored in the job queue.

4. The resource management program according to claim 1 or 2, wherein completing configuring the backup device includes loading a driver of the additional resource, reserving a resource used for the driver, and installing the driver.

5. The resource management program according to any one of claims 1 to 4, causing the computer to further execute a process of acquiring the predetermined resource from the resource pool and adding the acquired predetermined resource to the backup device to make the backup device have the predetermined hardware configuration before installing the OS on the backup device.

6. The resource management program according to any one of claims 1 to 5, wherein the specifying the additional resource is a process of specifying, as the additional resource, any one type or a plurality of types among a graphics processing unit (GPU), an auxiliary storage device, and a main storage device.

7. A resource management method carried out by a computer (31), comprising:
installing an OS on a backup device having a predetermined hardware configuration and setting the backup device to standby in a state where the OS is booted;
specifying, when the backup device is incorporated into a cluster, a hardware resource to be used based on a predetermined job to be allocated to the backup device and determining an additional resource to be added to the predetermined hardware configuration;
acquiring the additional resource from a resource pool (3) that stores a plurality of hardware resources and adding the acquired additional resource to the backup device;
completing configuring the additional resource in the backup device; and
incorporating the backup device into the cluster.

8. A resource management apparatus (31) comprising:
a configuration management unit (13) configured to set a backup device having a predetermined hardware configuration to standby in a state where an OS is booted;
an additional configuration determination unit (14) configured to specify, when the backup device is incorporated into a cluster, a hardware resource to be used based on a predetermined job to be allocated to the backup device and to determine an additional resource to be added to the predetermined hardware configuration;
a configuration change unit (16) configured to acquire the additional resource from a resource pool (3) that stores a plurality of hardware resources and to add the acquired additional resource to the backup device;
a software application unit (15) configured to complete configuring the additional resource in the backup device; and
a cluster management unit (11) configured to incorporate the backup device where the additional resource is completed into the cluster.
